# EUROPEAN PATENT APPLICATION

(11) **EP 1 531 609 A1**
(43) Date of publication of application: **18.05.2005**
(21) Application number: 04027299.9
(22) Date of filing: 17.11.2004
(51) Int. Cl.: H04M 19/04

(54) **Apparatus and method for reproducing three dimensional stereo sound for communication terminal**

(30) Priority: 17.11.2003 KR 2003081269
(71) Applicant: Samsung Electronics Co., Ltd., Suwon-si, Gyeonggi-do (KR)
(72) Inventor: Kang, Sang-Ki, Yeongtong-gu, Suwon-si, Gyeonggi-do (KR); Kim, Jae-Hyun, Yeongtong-gu, Suwon-si, Gyeonggi-do (KR); Kim, Yong-Serk, Yeongtong-gu, Suwon-si, Gyeonggi-do (KR)
(74) Representative: Lang, Johannes, Dipl.-Ing.

(57) **Abstract**

Disclosed is an apparatus and a method for enabling sound data having a three dimensional stereo sound effect to be reproduced in a mobile communication terminal. A three dimensional stereo sound reproducing apparatus for a mobile communication terminal comprises: a memory for storing sound data having a three dimensional stereo sound effect; a sound processing unit for reading the sound data from the memory when an incoming call is generated or when a user requests reproduction of the sound data and for decoding the sound data without distortion of the three dimensional stereo sound effect, thereby outputting the sound data as a type of an analog signal; and a speaker for amplifying the analog signal and outputting the amplified analog signal as a type of an audible sound. Therefore, it is possible to obtain an excellent three dimensional stereo sound effect and an excellent performance in reproducing original sound.

## Description

### BACKGROUND OF THE INVENTION

### 1. Field of the Invention

The present invention relates to a mobile communication terminal. More particularly, the present invention relates to an apparatus and a method for enabling sound data having a three dimensional stereo sound effect to be reproduced in a mobile communication terminal.

### 2. Description of the Related Art

A portable phone such as a cellular phone and a PCS (Personal Communication Services) phone, which is a typical communication terminal, emits a sound or an alert sound to the exterior through a speaker so that a user can recognize a call incoming while using the portable phone. With the development of communication and sound processing techniques and the request of users, various research is being actively conducted to reproduce richer sound in a small communication terminal. Moreover, the use of the Internet has spread so rapidly that it is possible to download various original melody sounds and moving pictures to a communication terminal via the Internet, so that user requests for reproducing the original melody sounds in a communication terminal has increased more and more.

Now, most communication terminals for reproducing 4 poly sound or more use Yamaha sound chips to reproduce melody sound data. The Yamaha sound chips are classified into 4 poly, 16 poly, 40 poly, and 64 poly. The term "poly" is used to distinguish the sound chips according to the number of chords that can be reproduced. In general, sounds of various musical instruments as many as the relevant number of 'poly' can be simultaneously represented. Therefore, as the number of 'poly' increases, higher fidelity sounds can be represented.

Recently, various attempts have been made to provide a three dimensional stereo sound effect, beyond the reproduction of a simple beeping sound, by equipping a communication terminal with two or more speakers. The term "stereo sound" means a sound signal to which spatial information is added so that a listener can perceive direction and distance of a sound upon hearing it. Recently, the three dimensional stereo sound effect has been applied also to the mobile communication field resulting in an increased demand for sound recording and reproducing techniques to provide more enhanced reality provided by added spatial information and moving information, so that it is necessary to authentically reproduce the three dimensional stereo sound.

A typical stereo sound reproduction is mainly provided by a multi-channel, for instance, 5.1 channel, in motion picture movie, TV, audio, and home theater fields. Recently, various attempts have been made into developing a portable phone or a personal digital assistant (PDA) phone capable of providing the three dimensional stereo sound effect. For example, a proposed method is to store sound data including information about the three dimensional stereo sound effect in a memory in advance and to reproduce the stored three dimensional stereo sound effect together with the sound data, which provides the three dimensional stereo sound effect to a user using a terminal equipped with two or more speakers.

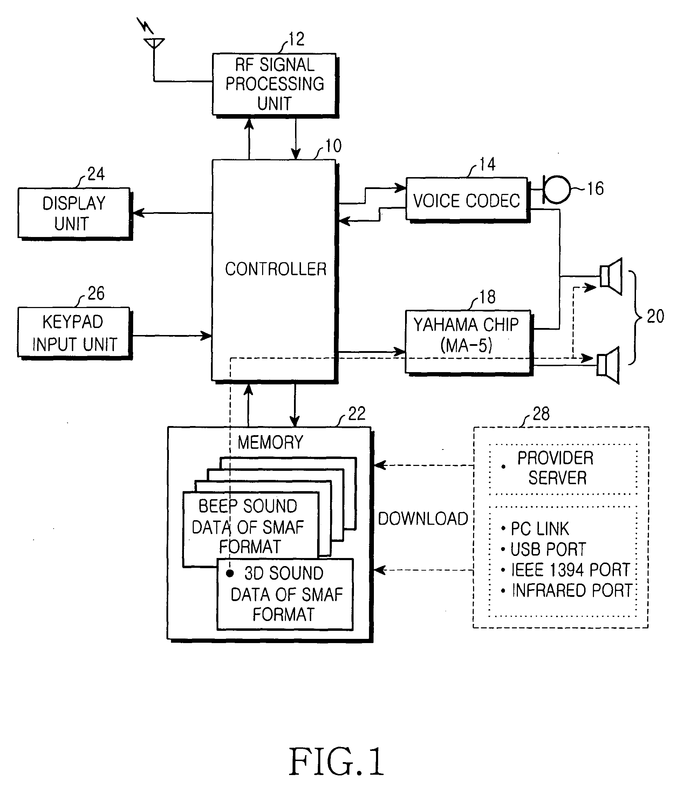

FIG. 1 is a block diagram illustrating a sound signal reproducing apparatus of a typical mobile communication terminal.

A controller 10 performs an entire control operation for the mobile communication terminal. A radio frequency (RF) signal processing unit 12 down-converts signals in a frequency band, which is received through an antenna by a radio channel of a predetermined frequency band from a network, and transmits the received signals to the controller 10 or a voice codec unit 14 according to the kinds of data, under the control of the controller 10.

Data transmitted from the RF signal processing unit 12 to the controller 10 includes data received through a traffic channel, a paging signal received through a control channel, a signaling signal, and the like. Data transmitted from the RF signal processing unit 12 to the voice codec unit 14 include voice data received when a voice call has been established. Also, the RF signal processing unit 12 up-converts data received from the controller 10 and coded voice data received from the voice codec unit 14 to radio signals of a predetermined frequency band and transmits the radio signals to the network through the antenna.

The voice codec unit 14 generally includes a vocoder and operates under the control of the controller 10. The voice codec unit 14 codes an electrical voice signal received from a microphone 16 and transmits the coded voice signal to the RF signal processing unit 12. Also, the voice codec unit 14 decodes coded voice data, which are received from the RF signal processing unit 12, to convert the coded voice data into an electrical voice signal, and then outputs the electrical voice signal to a speaker 20. The speaker 20 converts the received electrical voice signal into an audible sound and outputs the audible sound.

A display unit 24 includes a display device, such as a liquid crystal display (LCD), for displaying proceeding states with letters and/or icons, a vibration motor, and an alert lamp. The liquid crystal display of the display unit 24 displays a current state of the mobile communication terminal. Also, the liquid crystal display converts data input, when a user performs a key input, into letters, icons, or characters, and displays the letters, icons, or characters.

A keypad input unit 26 generally has a key matrix structure and includes number keys for dialing, function keys for performing various functions, a selection key, direction keys for movement in the up, down, light, left directions. The keypad input unit 26 generates key data corresponding to a key operated by a user and outputs the generated key data to the controller 10.

A memory unit 22 may include a ROM (Read Only Memory) and a RAM (Random Access Memory), and is classified into a region for storing program codes required to control the controller 10, a region for storing data input by a user, and a region for temporarily storing data generated during a controlling operation. In addition, the memory unit 22 includes sound data which can be used to notify a user of the reception of a call incoming or to generate an alert sound. The sound data may be stored by a manufacturer in advance or may be downloaded from a provider server (carrier server) 28 which can be connected to the mobile communication terminal through wireless, a USB (Universal Serial Bus) port, an IEEE 1394 port, an infrared port, or the like. In general, the sound data are stored in a synthetic music mobile application format ('SMAF'), which has an extension of '.mmf' when being stored as a file, so as to be processed by a Yamaha sound chip 18.

The Yamaha sound source chip 18 converts the sound data, which is read from the memory unit 22 by the controller 10, into an electrical signal, and outputs the converted electrical signal to the speaker 20. The speaker 20 includes two or more speaker devices so as to support the three dimensional stereo sound effect.

As described above, the conventional mobile communication terminal reproduces sound data such as a melody sound and the like using the Yamaha sound chip 18. Therefore, the memory unit 22 must store three dimensional sound data in the SMAF. Also, the provider server 28 does not process sound data in real time, but converts three dimensional sound effect obtained through a three dimensional reproducing algorithm into the SMAF and then downloads the converted data to the memory unit 22.

However, when sound data having the three dimensional stereo sound effect is converted into the SMAF, a sizeable portion of the three dimensional stereo sound effect is removed and the amount of data becomes huge, so that it is difficult to actually apply the three dimensional stereo sound effect to a mobile communication terminal.

Now, while a mono melody sound, which is obtained by a scheme for outputting sound information using one speaker, and a stereo melody sound, which is obtained by a scheme for outputting planar sound information using two speakers, uses 30 Kbytes or less, sound data having a three dimensional stereo sound effect is ten times larger in size than that of the conventional melody sound data. When three dimensional sound data having an enormous size as described above is approximated to the SMAF using a synthetic sound table provided from the Yamaha sound chip, the size of the sound data is somewhat reduced, but the three dimensional stereo sound effect of original sound data is significantly deteriorated.

That is, since the Yamaha sound chip does not completely support the three dimensional stereo sound effect and approximately estimates original sound data by means of a synthetic sound table and tones which the chip has, an error is generated, so the conventional devices are limited in correctly reproducing the original sound data. In addition, since the Yamaha sound chip causes distortion of a specific sound when simultaneously reproducing voice and music sounds, first sound data including only voices and second sound data including only melodies must be separately stored when melody sounds are made up, thereby requiring a large storage capacity.

### SUMMARY OF THE INVENTION

Accordingly, the present invention has been made to solve the above-mentioned problems occurring in the prior art and provides other advantages, and an object of the present invention is to provide an apparatus and a method for reproducing sound having a three dimensional stereo sound effect in a mobile communication terminal.

Another object of the present invention is to provide an apparatus and a method for storing sound data having a three dimensional stereo sound effect in a device with a minimum size in a mobile communication terminal.

Still another object of the present invention is to provide an apparatus and a method for storing sound data having a three dimensional stereo sound effect in an MP3 format or an AAC format and for reproducing the stored sound data.

To accomplish this object, in accordance with one aspect of the present invention, there is provided a three dimensional stereo sound reproducing apparatus for a mobile communication terminal, the three dimensional stereo sound reproducing apparatus comprises a memory for storing sound data having a three dimensional stereo sound effect; a sound processing unit for reading the sound data from the memory when an incoming call is generated or when a user requests reproduction of the sound data and for decoding the sound data without distortion of the three dimensional stereo sound effect, thereby outputting the sound data as a type of an analog signal; and a speaker for amplifying the analog signal and outputting the amplified analog signal as a type of an audible sound.

In accordance with another aspect of the present invention, there is provided a method for reproducing sound data having a three dimensional stereo sound effect in a communication terminal, the method comprises the steps of storing the sound data having the three dimensional stereo sound effect in a memory of the communication terminal; reading the sound data from the memory when an incoming call is generated or when a user requests reproduction of the sound data and decoding the sound data without distortion of the three dimensional stereo sound effect; and converting the decoded data into an analog signal and outputting the analog signal as a type of an audible sound.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating a sound signal reproducing apparatus of a typical mobile communication terminal;
FIG. 2 is a block diagram illustrating a sound signal reproducing apparatus of a mobile communication terminal according to a preferred embodiment of the present invention; and
FIG. 3 is a flowchart illustrating a sound signal reproducing operation in a mobile communication terminal according to an embodiment of the present invention.

### DETAILED DESCRIPTION OF THE PREFERRED EMBODIMENTS

Hereinafter, preferred embodiments of an apparatus and a method for reproducing a three dimensional stereo sound for a communication terminal according to the present invention will be described with reference to the accompanying drawings. In the following description of the present invention, a detailed description of known functions and configurations incorporated herein will be omitted when it may obscure the subject matter of the present invention.

The present invention is proposed to store and reproduce sound data having a three dimensional stereo sound effect using Motion Picture Experts Group-1 Audio layer 3: MPEG-1 layer 3 (MP3) or MPEG-2 Advanced Audio Coding (MPEG-2 AAC, hereinafter referred to 'ACC') in a mobile communication terminal.

That is, according to an apparatus and a method of the present invention, a communication terminal such as a portable phone or a PDA phone, in which an MP3 decoder or an AAC decoder is included, generates sound data in an MP3 format or an AAC format, stores the generated sound data in a communication terminal, and reproduces the stored sound data using the MP3 decoder or the AAC decoder so as to improve the performance and the memory efficiency of the communication terminal when a three dimensional stereo sound is reproduced.

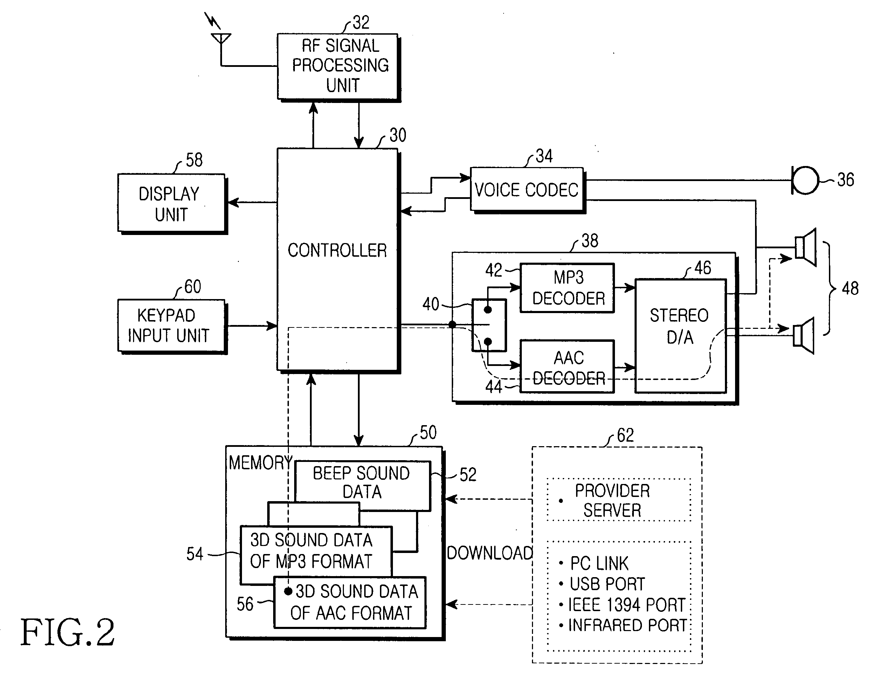

FIG. 2 is a block diagram illustrating a sound signal reproducing apparatus of a mobile communication terminal according to a preferred embodiment of the present invention.

A controller 30 includes a modem chip for performing an entire control operation for the mobile communication terminal. An RF (Radio Frequency) signal processing unit 32 down-converts bands of frequency which is received through an antenna by a radio channel of a predetermined frequency band from a network, and transmits the received signal to the controller 30 or a voice codec unit 34 according to the kinds of data, under the control of the controller 30.

Data transmitted from the RF signal processing unit 32 to the controller 30 include data received through a traffic channel, a paging signal received through a control channel, a signaling signal, and the like. Data transmitted from the RF signal processing unit 32 to the voice codec unit 34 include voice data received when a voice call has been established. Also, the RF signal processing unit 32 up-converts data received from the controller 30 and coded voice data received from the voice codec unit 34 to radio signals of a predetermined frequency band and transmits the radio signals to the network through the antenna.

The voice codec unit 34 generally includes a vocoder and operates according to the control of the controller 30. The voice codec unit 34 codes an electrical voice signal received from a microphone 36 and transmits the coded voice signal to the RF signal processing unit 32. Also, the voice codec unit 34 decodes coded voice data, which are received from the RF signal processing unit 32 through the controller 30, to convert the coded voice data into an electrical voice signal, and then outputs the electrical voice signal to a speaker 48. The speaker 48 converts the received electrical voice signal into an audible sound and outputs the audible sound.

A display unit 58 includes a displayer, such as a liquid crystal display (LCD), for displaying proceeding states with letters and/or icons, a vibration motor, and an alert lamp. The liquid crystal display of the display unit 58 displays a current state of the mobile communication terminal. Also, the liquid crystal display converts data inputted, into letters, icons, or characters, and displays the letters, icons, or characters.

A keypad input unit 60 generally has a key matrix structure and includes number keys for dialing, keys for inputting text, function keys for performing various functions, a selection key, direction keys for movement in the up, down, light, left directions. The keypad input unit 60 generates key data corresponding to a key operated by a user and outputs the generated key data to the controller 30.

A memory unit 50 may include a Read Only Memory (ROM) and a Random Access Memory (RAM), and is classified into a region for storing program codes required to control the controller 30, a region for storing data input by a user, and a region for temporarily storing data generated during a controlling operation. In addition, the memory unit 50 includes sound data 52, 54, and 56, which can be used to notify a user of the reception of a call incoming or to generate an alert (alarm) sound.

The sound data 52, 54, and 56 may be stored by a manufacturer in advance or may be downloaded from a provider server (carrier server) 62 which can be connected to the mobile communication terminal through wireless, a Universal Serial Bus (USB) port, an IEEE 1394 port, an infrared port, or the like. Also, a user can connect the mobile communication terminal to a personal computer through wireless, a USB port, an IEEE 1394 port, or an infrared port, and then download and store the sound data 52, 54, and 56 in the memory unit 50 using the connected personal computer.

The sound data includes a three dimensional stereo sound effect so as to be processed by a sound processing unit 38 and is compressed in the MP3 format or the AAC format.

The sound processing unit 38 converts the sound data 52, 54, and 56, which is read from the memory unit 50 by the controller 30, into an electrical signal, and outputs the electrical signal to the speaker 48. The speaker 48 includes two or more speaker devices so as to support the three dimensional stereo sound effect. The speaker 48 is a stereo speaker which amplifies an analog stereo signal output through a stereo digital-to-analog converter 46 and outputs the analog stereo signal as an audible sound.

The operation of the sound processing unit 38 will now be described in more detail.

The sound processing unit 38 includes the stereo digital-to-analog converter 46 and at least one of an MP3 decoder 42 and an AAC decoder 44. FIG. 2 shows a structure in which both the MP3 decoder 42 and the AAC decoder 44 are included and one of the two decoders is selected by a switch 40.

That is, the memory unit 50 stores two dimensional melody sound data 52, three dimensional sound data 54 of an MP3 format, and three dimensional sound data 56 of an AAC format. When reproduction is required by a user, an incoming call is generated, or a request such as alert is generated, the controller 30 reads a relevant sound data from the memory unit 50 and provides the read data to the sound processing unit 38.

When the three dimensional sound data 54 of the MP3 format is read by the controller 30, the switch 40 is switched under the control of the controller 30 to send the three dimensional sound data 54 of the MP3 format to the MP3 decoder 42. The three dimensional sound data 54 is decoded according to an MP3 scheme by the MP3 decoder 42, is converted into an electrical signal by the stereo digital-to-analog converter 46, and then is output through the speaker 48. When the three dimensional sound data 56 in the AAC format is read by the controller 30, the switch 40 is switched under the control of the controller 30 to send the three dimensional sound data 56 of the AAC format to the AAC decoder 44. The three dimensional sound data 56 is decoded according to an AAC scheme by the ACC decoder 44, is converted into an electrical signal by the stereo digital-to-analog converter 46, and then is output through the speaker 48. The melody sound data 52 can be reproduced by any one of the MP3 decoder 42 and the ACC decoder 44.

Hereinafter, compression schemes applied according to embodiments of the present invention will be described.

In general, in order to reproduce various sounds generated in nature using an electric device, voice and sound signals are converted into pulses and stored in a wave shape. However, in order to store the sound with the quality of sound similar to the original sound, a remarkably large capacity reaching approximately 10 Mbytes is required to store sound signals for one minute. Schemes for compressing and storing sound data were studied to solve the problem of the above-mentioned large capacity, resulting in making an MP3 sound compression codec (MP3). The MP3 is made on the basis of MPEG-1, which is a compression format for video data and is developed to a standard for sound data.

The MP3 can compress digital audio data into a size approximately twelve times smaller than that of digital audio data stored in a general audio compact disc (CD) while maintaining the quality of the digital audio sound. The MP3 sound data having a size ten times smaller than that of a general digital audio data can ensure the quality of sound (16 bits and 44.1 kHz) as good as a CD.

Unlike the MP3, the AAC compression scheme is not derived from either MPEG-1 or MPEG-2, but is called 'MP4', which means a more developed technique than MP3. The MPEG-2 used for a digital versatile disc (DVD) video has a superior sound quality than and a higher compression ratio than those of MPEG-1, thereby having excellent performance including a screen quality four times as good as that of the MPEG-1 and the support of multiple languages. The AAC deriving from such MPEG-2 can compress a general digital audio data by a twentieth (1/20) and is a digital file compression method capable of preventing the data from being illegally copied.

The data structure of the MP3 is fixed while the data structure of the AAC is variable. That is, MP3 causes data to be stored according to frames following a header, which contains information about the whole of a tune. Since the frame has a fixed size, the frame may include an unoccupied capacity which is unnecessary even in a portion having a high compression ratio. In contrast, since the frame of the AAC has a variable structure to change the size of the frame according to compression ratios, the capacity of the entire data is significantly reduced. Actually, the AAC can reduce its data capacity by maximum 30 % as compared with that of the MP3.

The second advantage of the AAC is the good quality of the sound. Unlike the MP3, the AAC maintains the quality of the original sound by two techniques, that is, a temporal noise shaping (TNS) and a prediction. The TNS is a quantization compensation technique, which reduces noise and generates a sound similar to an original sound by perceptually decreasing error caused when a continuous analog music signal is changed into digital data of 'ones' and 'zeroes'. The prediction includes storing a value compensated by the TNS. That is, the prediction is to storing information about values compensated in previous portions and to use the memorized information when the same data is generated in following portions. If two same sounds are compensated to different values in a quantization step, the two same sounds are output as two different sounds. Therefore, the prediction is performed so that the same sounds can be compensated to the same value and reproduced as the same sound.

As described above, the MP3 and the AAC do not change original sound data to those approximate values, but compress the original sound data by a perceptual coding method at a level in which the characteristics of an audio signal cannot be perceptually recognized, thereby preventing a three dimensional stereo sound effect included in the original sound data from being distorted. Moreover, from the viewpoint of a provider server 62 for providing a service for the three dimensional sound data 54 and 56 and the mobile communication terminal, there are advantages in that a download time is shortened and memory use becomes twice as efficient as compared to that of a conventional SMAF.

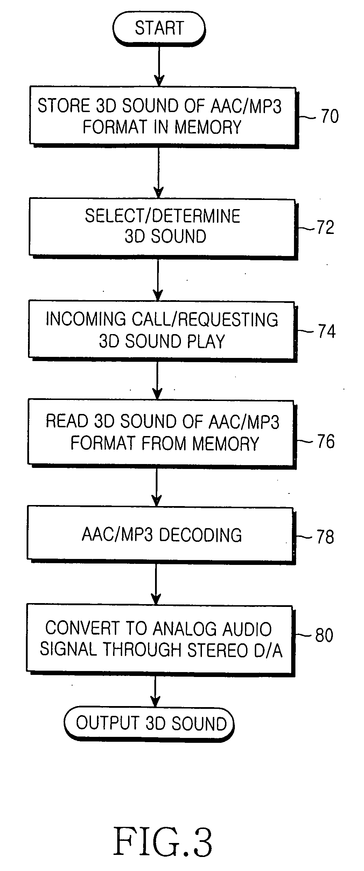

FIG. 3 is a flowchart illustrating a sound signal reproducing operation in a mobile communication terminal according to an embodiment of the present invention.

In step 70, three dimensional sound data of the MP3 format or the AAC format is stored in the memory unit 50 of the mobile communication terminal from a manufacturer, a user of the mobile communication terminal, or a provider server through wireless, a USB port, an IEEE 1394 port, or an infrared port. In step 72, the user selects and determines a three dimensional melody sound corresponding to the three dimensional sound data as an incoming melody sound.

When a call is incoming or when the reproduction of the melody sound is required by the user in step 74, the controller 30 reads the three dimensional melody sound determined as the incoming melody sound or relevant three dimensional sound data required by the user from the memory, and controls the switch 40 to be switched to a decoder 42 or 44 corresponding to the format of the read three dimensional sound data (step 76).

In step 78, the decoder 42 or 44 connected with the switch 40 receives the read three dimensional sound data through the switch 40 and decodes the received data according to an MP3 scheme or an AAC scheme, respectively. In step 80, the decoded signal is converted into an analog audio signal by the stereo digital-to-analog converter 46 and then is outputted through the speaker 48.

Now, effects obtained according to the embodiments the present invention described in detail above will be briefly described.

When three dimensional stereo sound data processed offline are reproduced, the three dimensional stereo sound data can be reproduced while the quality of an original sound is maintained at a satisfactory level by using data constructed with the AAC format or the MP3 format, so that it is possible to obtain an excellent three dimensional stereo sound effect and excellent performance in reproducing the original sound.

In addition, since the AAC format or the MP3 format is used, the size of sound data is reduced by half, the capacity and the manufacturing cost for a data storing memory can be significantly reduced while an excellent perceptual quality of sound is ensured without any distortion. Also, since the period of time required to download sound data is reduced by half, a user's download fee be can decreased.

While the present invention has been shown and described with reference to certain preferred embodiments thereof, it will be understood by those skilled in the art that various changes in form and details may be made therein without departing from the spirit and scope of the invention as defined by the appended claims. Accordingly, the scope of the invention is not to be limited by the above embodiments but by the claims and the equivalents thereof.

## Claims

1. A three dimensional stereo sound reproducing apparatus for a mobile communication terminal, the three dimensional stereo sound reproducing apparatus comprising:
a memory for storing sound data having a three dimensional stereo sound effect;
a sound processing unit for reading the sound data from the memory when an incoming call is generated or when a user requests reproduction of the sound data and for decoding the sound data without distortion of the three dimensional stereo sound effect, thereby outputting the sound data as a type of an analog signal; and
a speaker for amplifying the analog signal and outputting the amplified analog signal as a type of audible sound.

2. The three dimensional stereo sound reproducing apparatus as claimed in claim 1, wherein the sound data is stored in one format of a MPEG-1 layer 3(MP3) format and a MPEG-2 Advanced Audio Coding (AAC ) format.

3. The three dimensional stereo sound reproducing apparatus as claimed in claim 1, wherein the sound processing unit comprises:
at least one decoder of an MP3 decoder and an AAC decoder for decoding the sound data according to formats of the sound data, the MP3 decoder decoding the sound data in an MP3 decoding scheme, the AAC decoder decoding the sound data in an AAC decoding scheme; and
a stereo digital-to-analog converter for converting the decoded data into a stereo analog signal.

4. The three dimensional stereo sound reproducing apparatus as claimed in claim 1, wherein the sound processing unit further comprises a switch for performing a switching operation to transmit the sound data to the MP3 decoder or the AAC decoder according to the format of the sound decoder.

5. The three dimensional stereo sound reproducing apparatus as claimed in claim 1, wherein the speaker includes at least two speaker devices so as to reproduce a stereo sound.

6. The three dimensional stereo sound reproducing apparatus as claimed in claim 1, wherein the sound data either is stored by a manufacturer in advance or is downloaded through a wireless interface or a wire interface from a service provider's server or a user's personal computer to the memory.

7. A method for reproducing sound data having a three dimensional stereo sound effect in a communication terminal, the method comprising the steps of:
storing the sound data having the three dimensional stereo sound effect in a memory of the communication terminal;
reading the sound data from the memory when an incoming call is generated or when a user requests reproduction of the sound data and decoding the sound data without distortion of the three dimensional stereo sound effect; and
converting the decoded data into an analog signal and outputting the analog signal as a type of an audible sound.

8. The method as claimed in claim 7, wherein the sound data are stored in one format of a MPEG-1 layer 3 (MP3) format and a(AAC ) format.

9. The method as claimed in claim 7, wherein the decoding step comprises the steps of:
checking whether the sound data has a MPEG-1 layer 3 (MP3) format or a MPEG-2 Advanced Audio Coding (AAC) format;
decoding the sound data by an MP3 decoder when the sound data has the MP3 format; and
decoding the sound data by an AAC decoder when the sound data has the AAC format.

10. The method as claimed in claim 7, wherein, in the outputting step, the decoded data is converted into a stereo analog signal, amplified, and then outputted.

11. The method as claimed in claim 7, wherein, in the outputting step, the analog signal is outputted through a speaker including at least two speaker devices so as to reproduce a stereo sound.

12. The method as claimed in claim 7, wherein the sound data either is stored by a manufacturer in advance or are downloaded through a wireless interface or a wire interface from a service provider's server or a user's personal computer to the memory.
